# EUROPEAN PATENT APPLICATION

(11) **EP 2 336 562 A1**
(43) Date of publication of application: **22.06.2011**
(21) Application number: 08800774.5
(22) Date of filing: 04.09.2008
(51) Int. Cl.: F03G 3/00, F03G 7/08

(54) **A BUFFER DEVICE FOR CONVERSING THE ENERGY PRODUCED ON A ROAD**

(71) Applicant: Chang, Hung-Wei, Taiwan (CN); Lee, Chih-Yang, Taiwan (CN)
(72) Inventor: Chang, Hung-Wei, Taiwan (CN); Lee, Chih-Yang, Taiwan (CN)
(74) Representative: Chaillot, Geneviève
(86) International application number: PCT/CN2008/072262
(87) International publication number: WO 2010/025592

(57) **Abstract**

An on-road energy conversion and vibration absorber apparatus receives the kinetic energy from moving vehicles and pedestrians when being weighed down, and converts the received kinetic energy into a static energy using a restorable elastic element compressing a fluid thereby storing the static energy in a pressure chamber, and then conducting the pressurized fluid to pass though a check valve along a conduit and drive a vane wheel by releasing its static energy. The vane wheel in turn drives a generator to generate electric energy, the vibration of the vehicles is alleviated by cushion effect provided by the apparatus.

## Description

### BACKGROUND OF THE INVENTION

### 1. Field of the invention

The present invention relates to a buffer device for converting the energy produced on a road in which the kinetic energy received from moving vehicles (including motorcycles and bicycles) and pedestrians is converted into a static energy using a restorable elastic element to compress and pressurize a fluid, and then to drive a vane wheel by releasing the pressure of the pressurized fluid. The vane wheel in turn drives a generator to generate electric energy.

### 2. Description of the Prior Art

Continuous rising of the oil cost induces the people to respond to the national policies of environmental protection, energy saving, carbon reduction and anti-global green house effect for the sake of achieving a good balance of energy circulation so as to maintain the healthy living condition for all the creature on earth and make the life of human being happier, and contribute to the government policy of energy saving and carbon reduction thereby achieving a good reputation in the international society. It is a paramount importance for all of the countries in the world to seek for and develop new efficient and reliable recyclable energies. Seeking for a new energy (excluding those conventional ones such as the steam power, hydraulic power, nuclear power, and tidal power) which is better in stability compared with those relatively new ones (such as wind and solar powers) practically needs a dexterous technology with inventiveness and creativeness.

As it is well-known, the traditional steam power plant produces a large amount of carbon dioxide when it burns the fuel that aggravates the green house effect. The hydraulic power is not reliable during low water period. The nuclear power plant is said to be the most threatful to the security due to its radiation sickness. Both the wind power and solar light are considered to be sometimes geographically restrictive by reason of local climate. It is a problem of head-ache for the whole world to develop and seek for a new energy source which can recycle without contaminating our surroundings. We are now facing a serious problem that there are so many vehicles including motor-cycles running on the roads producing a large amount of polluting carbon dioxide with heat and causing environmental contamination.

In a bid to tackle with this problem, the inventor of the present invention has thought of the fact that there is so much energy loss produced by the heat engines of vehicles and motor-cycles running on roads that has to be effectively recovered for re-use but remains as exhausted poisonous gases to pollute surroundings. This must be carefully restored to turn into a reusable energy.

### SUMMARY OF THE INVENTION

It is an object of the present invention to provide a buffer device for converting the energy produced on a road with which to buffer vibration of vehicles and absorb the kinetic energy so as to release the drivers uncomfortable feeling and prevent energy loss. This apparatus comprises a restorable compression unit and a check valve. The restorable compression unit is disposed on the road surface to receive the weight and energy from the vehicles, motor-cycles and walkers passing by. The check valve is used to conduct the fluid to flow in one direction to a compression chamber in the compression unit and compressed to produce a compression energy thereby buffering the vehicle vibration. In such a way the restorable compression unit is able to receive the weight and energy from the vehicles, motor-cycles and walkers passing by. The compressible air absorbs the energy and attains a buffering effect. Moreover, the weight and energy of the vehicles, motor-cycles and walkers can be converted into an elastic potential energy of the restorable compressive unit.

It is another object of the present invention to provide a buffer device for converting the energy produced on a road to receive the weight and energy of the vehicles, motor-cycles and walkers on a road to convert into a fluid kinetic energy (the energies to be converted include weight energy, kinetic energy, rotating energy of the wheels, and the walker's foot step energy) specially by means of conducting the fluid via a fluid pipe after compressing in a compression chamber of a compression unit. The apparatus required consists of the restorable compression unit, the fluid pipe, and a check valve. Among them the restorable compression unit is disposed on a road surface so as to receive the weight and energy of the vehicles, motor-cycles and walkers and the conduct the pressurized fluid to flow in one way via the fluid pipe by means of the check valve and compressed to become a fluid jet producing a kinetic energy. Afterwards the restorable compression unit brings its pressure receiving member back to the initial state ready to perform next operation.

It is another object of the present invention to provide a buffer device for converting the energy produced on a road wherein a valve is provided at the end of the fluid exit to control time of fluid spraying.

It is another object of the present invention to provide a buffer device for converting the energy produced on a road wherein the kinetic energy of fluid jet from the fluid pipe is received by a water sprayer or an impeller (wind wheel, water wheel) for producing a rotating energy.

It is another object of the present invention to provide a buffer device for converting the energy produced on a road wherein the kinetic energy of fluid jet from the fluid pipe is received by a water sprayer or an impeller (wind wheel, water wheel) for producing a rotating energy to drive a generator which in turn produces electricity.

It is another object of the present invention to provide a buffer device for converting the energy produced on a road wherein the pressure receiving member is formed into square or bee-hive plate shape in its outlook, and an elastic member is provided to return the pressure receiving member to its initial state.

In the present invention, the weight and energy of the vehicles, motor-cycles and walkers on a road received by the device that including a restorable compression unit and a check valve. The energies (weight, kinetic, rotating wheel, walker's foot step) are compressed in a compression chamber of the compression unit to become a pressurized fluid. The restorable compression unit is disposed on the road surface to receive the weight and energy of the vehicles, motor-cycles and walker. The check valve can conduct the fluid to flow in one way into the compression chamber of the compression unit for producing pressure energy, and then connect it to a fluid pipe if it is necessary according to the road width. The fluid which being conducted by the check valve and the fluid pipe, flows in one way, compressed, and again conducted by the fluid pipe to produce a jet energy, or release its energy to a water sprayer or an impeller (wind wheel, water wheel) for producing a rotating energy to drive a generator which produces electricity.

The restorable compression unit bas an elastic member to restore the pressure receiving member to its initial state preparing for the next operation. A valve is provided at the end of the fluid exit to control time of fluid spraying. The pressure receiving member is formed into square or bee-hive plate shape in its outlook, and an elastic member is provided to return the pressure receiving member to its initial state. The branches of the fluid pipe are communicated one another to perform energy conversion is a large scale. With this construction, the pressure of a single vehicle can exert a pressure to a plurality of pressure receiving members to enlarge the converted energy.

### BRIEF DESCRIPTION OF THE DRAWINGS

Fig. 1 is a perspective view of the present invention showing the relative position of a pressure receiver plate, restorable elastic element and pressure chamber.
Fig. 2 is a perspective view of the present invention showing the relative position of a pressure receiver plate, restorable elastic element, pressure chamber, check valve and fluid conduit.
Fig. 3 is a perspective view of the present invention showing the relative position of an extra governor valve in addition to the components shown in Fig. 2.
Fig. 4 is a perspective view of the present invention showing the relative position of a vane wheel in addition to the components shown in Fig. 3.
Fig. 5 is a perspective view of the present invention showing a generator is connected to the apparatus shown in Fig. 4.
Fig. 6 is a schematic view showing the surface pattern of the pressure receiving plate.

### DETAILED DESCRIPTION OF THE PREFERRED EMBODIMENT

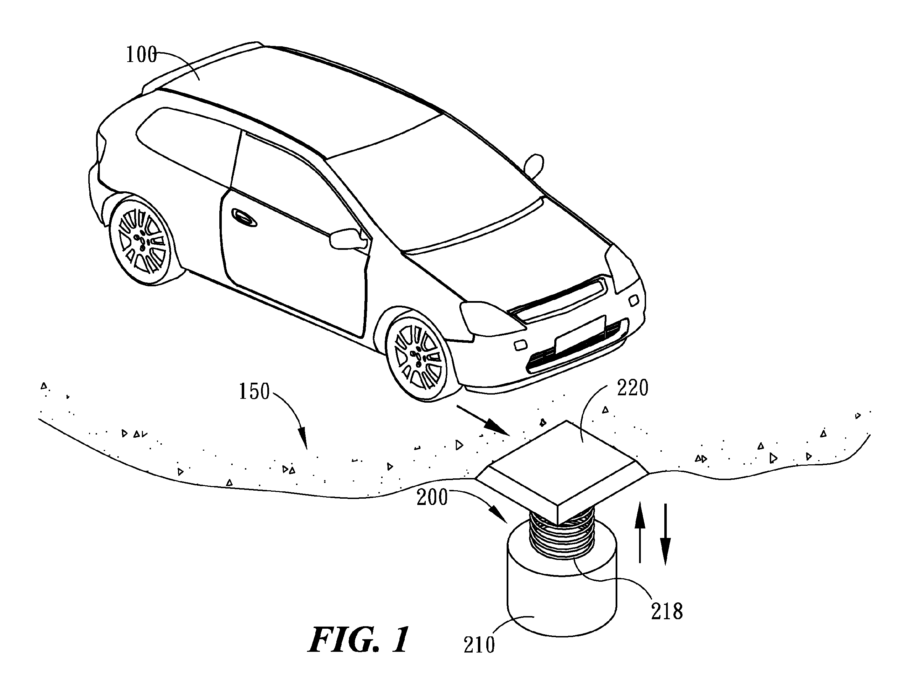

Referring to Fig. 1, a buffer device for converting the energy produced on a road receives the energy (static, kinetic energy of the rolling wheel) delivered by a vehicle 100 and even pedestrians when being weighed down on a pressure chamber 210 formed in a compression unit. The fluid contained in the pressure chamber 210 is pressurized to output a kinetic energy and at the same time, alleviating the vibration of the vehicle 100. In the apparatus, a compression unit 200 is installed beneath the road surface 150. When the vehicle 100 and pedestrians weigh down on a pressure receiver plate 220 of the compression unit 200, the fluid in the pressure chamber 210 is pressurized to store the static energy and then conducted to pass through a check valve 250 to flow in one direction, and the vibration of the vehicle is also alleviated by the cushion effect of the restoring force of the compression unit 200 performed by a restorable elastic element 218. The restorable elastic element 218 is a spring, or replaceable with the fluid in the pressure chamber 210. The fluid to be used is essentially air.

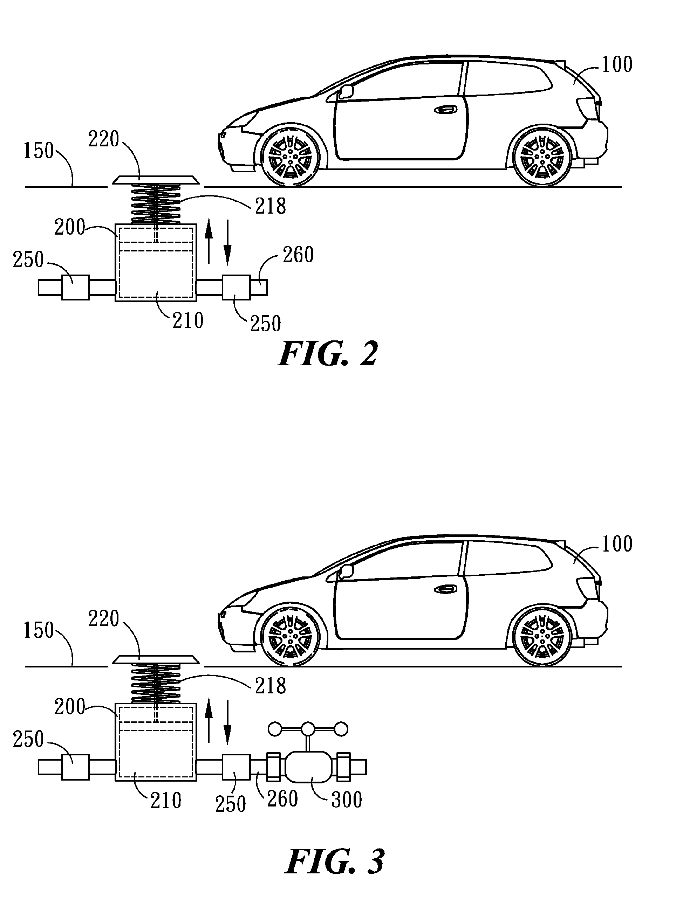

Referring to Fig. 2, in this embodiment, in addition to the component parts described in Fig. 1, a fluid conduit 260 is connected behind the check valve 250 to conduct the pressurized fluid to pass through in one direction along the fluid conduit 260 so as to make use of its kinetic energy.

Referring to Fig. 3, a governor valve 300 is provided to the exit of the fluid conduit 260 so as to control discharge of the fluid.

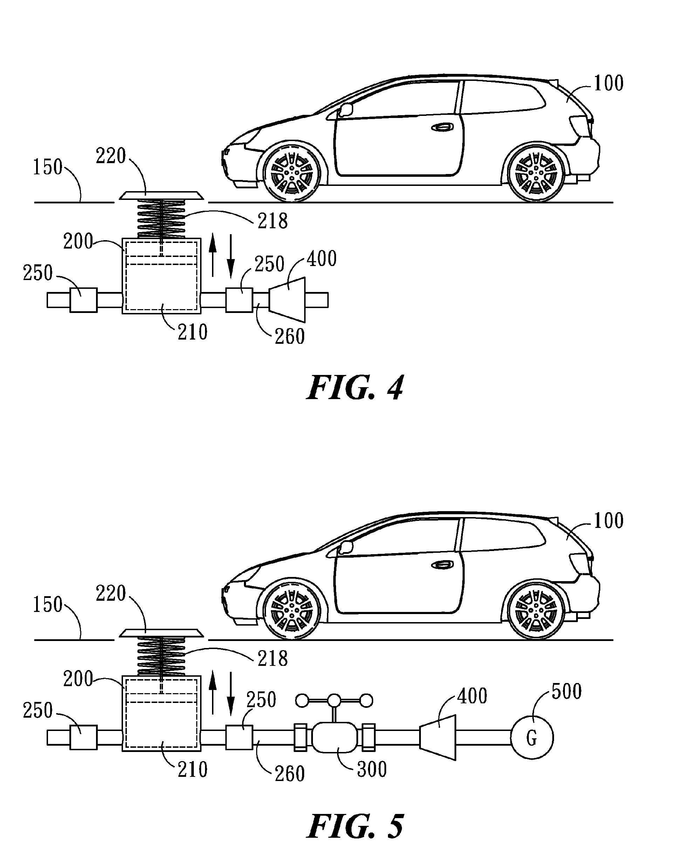

Referring to Fig. 4, the pressurized fluid discharged from the fluid conduit 260 is used to drive a vane wheel 400 (windmill, watermill) or a water spray gun by releasing its static energy.

Referring to Fig. 5, a generator 500 is connected to the vane wheel 400 or a water spray gun to be driven to generate electric energy.

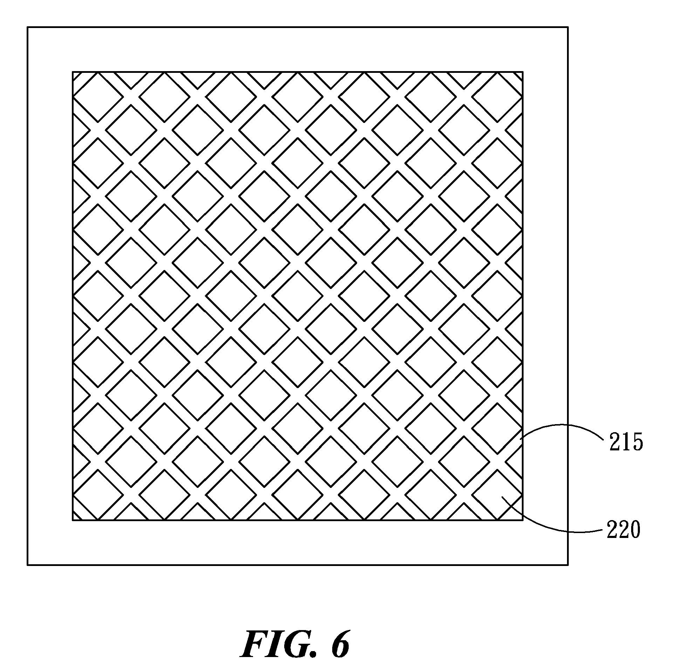

Referring to Fig. 6, the pressure receiver plate 220 has a structure of a large square plate whose surface contains a number of small square grid shaped meshes, or is patterned in a beehive configuration 215. After being liberated from the weight of the vehicle 100 or the pedestrian, the pressure receiver plate 220 recovers its initial state with the aid of the restorable elastic element 218 and ready for successively coming vehicles 100 or pedestrians to weigh down.

It is apparent to a person skilled in the art that the basic idea of the invention can be implemented in many different ways. The invention and its embodiments are thus not restricted to the examples described above, but may vary with the scope of the appended claims.

## Claims

1. A buffer device for converting the energy produced on a road comprising:
a restorable compression unit (200) disposed on the road surface (150) with a compression chamber (210) inside for receiving the weight and energy of the vehicles (100), motor-cycles and walkers passing by to compress the fluid air in the compression chamber (210); and
an elastic member (218) to bring said restorable compression unit (200) back to its initial state.

2. The apparatus of claim 1, wherein a valve (300) is provided at the end of the exit of a fluid pipe (260) to control said fluid jet.

3. The apparatus of claim 1, wherein the kinetic energy of said fluid jet from the fluid pipe (260) is received by an impeller or a water sprayer (400) for producing a rotating energy.

4. The apparatus of claim 1, wherein the kinetic energy of said fluid jet from the fluid pipe (260) is received by an impeller or a water sprayer (400) for producing a rotating energy to drive a generator (500) to supply electricity.

5. The apparatus of claim 1, wherein said compression unit (200) is provided with a pressure receiving member (220) which is formed in a square or bee-hive plate shape in its outlook, and has an elastic member (218) to restore said pressure receiving member (220) to its initial state, wherein the branches of said fluid pipe (260) are communicated one another to perform fluid energy conversion in a large scale.

6. A buffer device for converting the energy produced on a road comprising:
a restorable compression unit (200) to be laid on the road surface (150) with a pressure receiver plate (220) attached to the top thereof, and a pressure chamber (210) formed inside, said pressure receiver plate (220) being for receiving the weight of the moving vehicles (100) including motorcycles and bicycles and pedestrians to weigh down thereon so as to compress and pressurize a fluid, mainly air, contained in said pressure chamber (210);
an elastic element (218) supporting said pressure receiver plate (220) of the compression unit (200) to restore it to its initial position after releasing the exerting weight; and
a fluid conduit (260) with a check valve (250) installed abut on, and in connection with said pressure chamber (210), said check valve (250) for conducting said pressurized fluid to flow along said conduit (260) in one direction to produce kinetic energy with a jet fluid flow.

7. The apparatus of claim 6, wherein a governor valve (300) is provided to the exit of said fluid conduit (260) so as to control discharge of said fluid.

8. The apparatus of claim 6, wherein a vane wheel or a water spray gun (400) is employed to receive the energy of said fluid.

9. The apparatus of claim 6, wherein the energy received by vane wheel or water spray gun (400) is used to drive a generator (500).

10. The apparatus of claim 6, wherein said pressure receiver plate (220) is structured in a large square plate whose surface contains a number of small square grid shaped meshes, or patterned in a beehive configuration (215), and brought back to its initial position after being liberated from the exerted aforesaid weight by said restorable elastic element (218), said pressure receiver plate (220) is in communication with said fluid conduit (260) to transmit the received energy to said fluid.
